# EUROPEAN PATENT SPECIFICATION

(11) **EP 1 990 401 B1**
(45) Date of publication and mention of the grant of the patent: **29.08.2012**
(21) Application number: 06812681.2
(22) Date of filing: 06.10.2006
(51) Int. Cl.: C12C 5/00, C12C 7/053

(54) **METHOD OF PRODUCING AN AGAVE-BASED BEER-TYPE ALCOHOLIC DRINK**
VERFAHREN ZUR HERSTELLUNG EINES BIERARTIGEN ALKOHOLISCHEN GETRÄNKS AUF AGAVEBASIS
PROCEDE DESTINE A ELABORER UNE BOISSON ALCOOLISEE, DE TYPE BIERE, A BASE D'AGAVE

(30) Priority: 03.11.2005 MX JL05000047
(43) Date of publication of application: 12.11.2008
(73) Proprietor: Soltero Jimenez, Francisco Javier, Guadalajara Jalisco (MX)
(72) Inventor: Soltero Jimenez, Francisco Javier, Guadalajara Jalisco (MX)
(74) Representative: González Ballesteros, Pedro
(86) International application number: PCT/MX2006/000107
(87) International publication number: WO 2007/053000

(56) References cited:
- RU-C1- 2 143 466
- RU-C1- 2 161 188
- RU-C1- 2 264 445
- RU-C2- 2 161 189
- DATABASE GNPD [Online] Mintel; February 2005 (2005-02), anonymous: "Beer & Tequila Drink", XP002610339, Database accession no. ID10208571

## Description

### TECHNICAL FIELD OF THE INVENTION

The present invention applies to the technical field or technology sphere of the food industry, specifically of the alcoholic beverage field, and it concerns the method of producing a new fermented drink originated for the most part from the sugars of plants belonging to the Agavaceae family and to the genus of the *Agave* L., particularly those of the *Agave tequilana* A. Weber specie. This drink offers an industrial application since it is, above all, an alternative for human consumption and at the same time represents a new use for these types of plants,

The characteristics of the new product derived from the process hereby presented make it suitable for human consumption and attractive for the consumer due to its organoleptic features which are similar to traditional malt beer, and it contains Inulin as well. There is scientific evidence that Inulin is an important prebiotic nutraceutical since it is fermented in the large intestine, generating metabolites which prevent colon cancer and reduce blood cholesterol. These properties make the demand for the product feasible, which would consequently contribute to solving the marketing problems of the *Agave tequilana* A. Weber plant species, which many times intensify when the gap widens between its consumption and its availability.

Currently the use of *Agave* L. genus plants, particularly of the *Agave tequilona* A. Weber specie has been limited, and It has been mainly destined to the production of high proof distilled spirits, its use in other types of products is considered marginal.

### PURPOSE OF THE INVENTION

On one hand, this invention refers to the creation of a fermented low proof beer-type drink produced from the plants belonging to the Agavaceae family and to the Agave L. genus commonly known as Agaves, and presents organoleptic features similar to those of traditional malt beer. This invention also refers to the production process for said drink.

The production of this new product named "Agave Beer" is based on some of the stages of production of traditional malt beer, which are combined with other different stages to those used in the beer process and are the result of an inventive activity. The most innovative difference between the traditional malt beer process and the "Agave Beer" process is that the fermentable sugars of which the latter is produced derive mostly from the plants known as "Agaves", particularly of the *Agave tequilana* A. Weber specie, instead of being extracted from barley malt (*Hordeum vulgare*) or from other refined cereals or their starches. The other ingredients with which "Agave Beer" is produced are also basic ingredients of traditional malt beer, namely, hops (*Humulus lupulus*), water and yeast.

### BACKGROUND OF THE INVENTION

Since ancient times and up to the XIX century "pulque" was one of the most popular alcoholic beverages of Mexico. This drink is obtained from the fermentation of aguamiel (Agave nectar), or maguey juice, a plant which belongs to the family of the Agavaceae, to which the *Agave tequilana* A. Weber also belongs.

The traditional and known procedure for the production of pulque consists in obtaining the aguamiel from the maguey and placing it in a vessel, normally of hide skin, in which the fermentation caused by the natural flora of the product begins. This liquid is later transferred to fermentation tubs, also made of hide skin, in which the natural fermentation process continues. As the fermentation advances, it is controlled by tasters who watch over the viscosity, flavor and other organoleptic features to determine the moment In which to end the process. Once the previous process is completed the "pulque" is transferred to wood barrels to distribute to the shops called "pulquerlas".

"Pulque" has a very penetrating small and a white, thick texture which are very distinctive features of the drink. It may be "cured", meaning it may be flavored by adding other ingredients like pineapple, peanut, celery, lime, orange, etc.

During the 1920s, the viscosity and bad smell of "pulque" made it become considered by some as unplessant and unsanitary. During Lázaro Cardenas del Rio's presidency (1934-1940), anti-alcohol campaigns were organized that caused the decline in the consumption of "pulque" by the majority of the population.

Today, the "pulque" market is limited, not so much by the raw material from which it is produced, but because its production process makes its organoleptic features (texture, aroma, taste, etc.) not so appealing to the majority of consumers of low proof fermented drinks. However, "pulque" is the most widely known version of a fermented drink whose origin is the plants belonging to the *Agave* L. genus.

### The production process of Agave distilled drinks

Despite the decline in the popularity of "pulque", the culture of the production of Agave plant based drinks has not disappeared in Mexico, but it has rather refined to develop distilled drinks (of high alcohol proof), like Tequila, Mezcal or Bacanora.

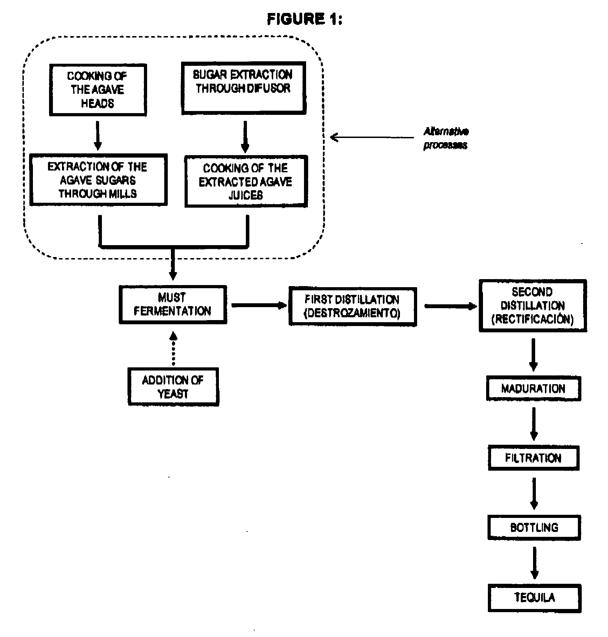

Figure 1 illustrates the basic and widely known steps of the general production process of Tequila, which is the most popular of the Agave plant distilled drinks.

To produce Tequila, a must is obtained from two widely known alternative methods: a) cooking the *Agave tequilana* A. Weber heads In ovens or autoclaves, followed by the extraction of its sugars with the help of grinders and its dilution in water; or b) raw extraction of the carbohydrates of the previously shredded *Agave tequilana* A. Weber heads and their dilution in water, with the help of a diffuser, to later cook the liquid. These techniques for obtaining the fermentable sugars in a must make it significantly different compared to the aguamiel that is used for the production of "pulque".

The must to produce Tequila is later fermented to generate a liquid with alcoholic content, which is distilled twice to increase its alcohol percentage and separate the desired volatile substances from the undesired ones. If you wish, the resulting drink may mature in barrels or casks so that it may acquire the wood characteristics and, finally, it is bottled.

The techniques currently used by the Tequila industry to obtain the must do not apply to the productive processes of any drink made mostly of Agave which is fermented but not distilled. As mentioned above, the Agave fermented drinks which are currently sold are based on the processing of an aguamiel but not a must. Using the techniques applied in the tequila industry to produce a must as a base for a fermented drink, instead of producing such a drink based on an aguamiel, should be considered an inventive activity.

### The traditional malt beer

From the beginning of the XX century traditional malt beer became popular in Mexico as an alternative to "pulque". Some of the factors that supported the acceptance of beer over "pulque" were its recognition as a "rigorously sanitary", "modern" and it was also said it had "nourishing" and "therapeutic" properties.

One of the main differences between "pulque" and traditional malt beer is the raw material from which the fermentable sugars are obtained. The former is produced from a plant belonging to the family of the Agavaceae, while the latter is produced, in most cases, from malted cereals or sprouts, mainly barley.

Additionally, in the case of malt beer, hops are a main ingredient which, however, is not used in the production of pulque, The hops generate the bitter taste so characteristic of malt beers.

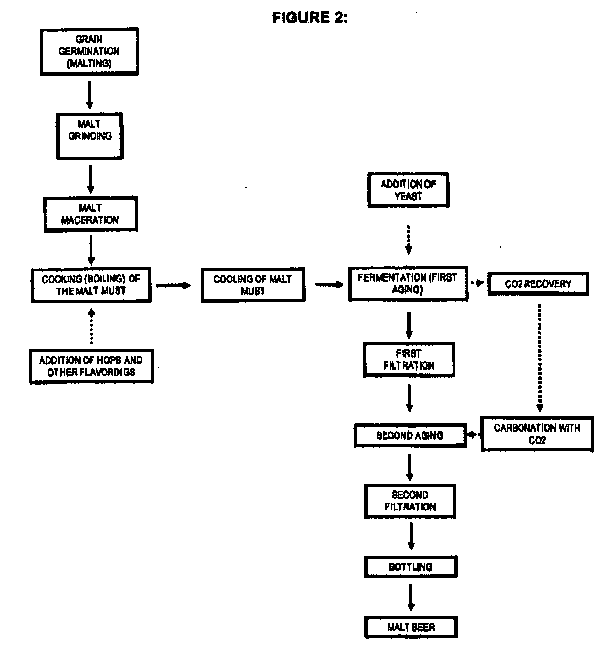

The production process of malt beer, which is much more complex than that of "pulque", also differs from the production process of Tequila. The production process for malt beer is described in Figure 2 and its widely known steps begin when the malt is obtained from a cereal (mainly barley), it is ground and macerated to obtain a must that contains the fermentable sugars, which are then boiled and hops is added. The resulting liquid, known as wort, is cooled to a temperature that will allow the yeast to develop and multiply. Once cooled, the yeast stock is inoculated, which will generate the fermentation that will transform most of the sugars into alcohol and carbon dioxide (CO₂). When the fermentation ends, the liquid undergoes aging processes and filtration before it is finally bottled. If necessary, additional CO₂ may be added before bottling the product.

### The production of new types of beer

Malt beer has grown to currently become one of the most popular alcoholic drinks in the world. Its acceptance has brought about the development of many varieties always based on the same ingredients: yeast, hops, water and malt, which In most cases can be complemented with beer additives, that is, refined cereal fractions that are used as a source of carbohydrates, mainly starch, which unfold into fermentable sugars and dextrins during the maceration.

However, recently there have been new products called "beer" that are not produced using cereal malt; instead they derive mainly from fermented sugars of other types of raw materials. For example, we can find milk beer Invented by a French farmer, according to a report of September 9, 2005, from the Mall & Guardian newspaper on its Internet webpage (http://www.mg.co.za), and which is already being produced in China, according to a People's Daily article on April 23, 2003 on its Internet page; or coffee beer, recently invented by a subsidiary of the Nestlé company, according to the November 1st NewScientist.com (http://newscientist.com) webpage and for which there is an existing patent application at the Word Intellectual Property Organization under number PCT/EP2004/009529 with the title "Coffee Fermented Beverage" and which refers to a beverage produced from coffee which, once ready to consume, has the appearance of a traditional beer with very good foaming; or finally, root beer, known widely in international markets, including Mexico, which although it does not share many of the characterics of traditional malt beer, is called "beer".

Until now there is no fermented beverage made mostly of Agave plant sugars that shares the typical organoleptic features of traditional malt beer. For this reason, an "Agave Beer" and its production process are an invention, since they generate a novel product that is obtained by making certain modifications to the already known production process of traditional malt beer. The modifications mainly refer to the method the must is obtained and formulated, but also include changes in certain production parameters, which are the result of an inventive activity that allows the development of a product with important industrial applications.

Existing bibliography shows that currently there are products produced from plants belonging to the family of the Agavaceae for which protection has been requested through a patent. In Mexico, there is a patent identified with the number MX231037, titled "Process for the production of an alcoholic beverage made from henequén (*Agave fourcroydes*)" and presents a method to use the juice from the henequén pineapples to produce an alcoholic beverage. Also In Mexico, is also a certificate of invention number MX7727, titled "Improved Microbiological Procedure to prepare a beverage based on sterilized aguamiel", which establishes a procedure to also produce an alcoholic drink but based on sterilized aguamiel. In both cases, however, the products obtained do not present the organoleptic features of a hopped beer as in the case of the present application, and the production of the former beverages do not require some of the processes presented in this invention.

On the other hand, at the international level, at the European Patent Office there exists a patent number EP 1 063 285 B1, granted on February 4, 2004, titled "Process for the preparation of a beer-type beverage", which describes a process to produce an alcoholic beverage with the characteristics of a beer but based on a starch-based glucose syrup. However, unlike the present application, it does not indicate that the raw material necessary to obtain the majority of the fermentable sugars must be a plant belonging to the family of the Agavaceae. Besides the fact that the production process described in both applications is different.

It is also important to mention that commercially it is possible to find beers with added Agave sugars. One of the most widely known cases is the one sold under the brand "Tequlza". However, as in the case of the above inventions, it is absolutely clear that both the product and the process to produce such a beer are different than those presented in this patent application.

Consequently, I request protection, through the granting of the corresponding patent, for the invention that consists In the process for the production of an Agave-based, beer-type alcoholic drink.

### DESCRIPTION OF THE INVENTION

The substitution of the fermentable raw material is the main difference between this new "Agave Beer" and the traditional malt beer. However, the simple substitution of the raw material is not enough to obtain a final product with industrial application. Obtaining the "Agave Beer" depends on applying certain changes to the known process for producing traditional malt beer, as well as the modification of some parameters in certain stages of the process that are common among both. The modifications, both in the stages as well as in the parameters, in addition to the substitution of the main raw material are the result of an inventive activity that allows the final product to be adequate for true industrial application.

In the case of the "Agave Beer", besides the must that contains the fermentable sugars mostly from Agave and water, other ingredients from traditional malt beer are also used: yeast and hops (or an extract of this). The change in the main source of fermentable sugars allows us to obtain a novel product that, as already mentioned, is suitable and attractive for the consumer, for which, besides offering an industrial application, increases the possibility of marketing the Agave plants that are cultivated in our country.

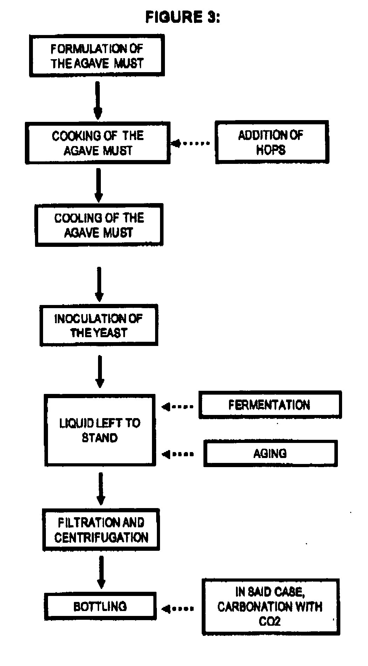

Figure 3 describes, In general terms, the process required to produce and obtain the "Agave Beer". This process is different from the process for producing a traditional malt beer. The steps used in this last process to generate the must are not efficient when it is about obtaining an Agave must. Also, if aguamiel were used instead of must, as in the case of other fermented Agave drinks such as pulque, there would be the problem of the product not presenting the organoleptic features described above which are clearly representative of most traditional beers. Therefore, derived from an inventive activity, we conclude that in order to produce "Agave Beer" it is necessary to obtain the must with the majority of fermentable sugars derived from Agave plants using the typical must extraction processes that currently apply to the Tequila industry as an initial step in producing distilled drinks. Alternatively, due to an existing developing market for Agave syrup, the must may also be obtained through the dilution of such syrups. That is, to produce an "Agave Beer" it Is necessary to incorporate steps to the process that have never been used in the production of a traditional malt beer.

One obvious difference between the malt musts and Lager and Ale type beer adjuncts and the Agave must is that in the latter the amylolytic activity of the malt produces two groups of sugars: dextrins and fermentable sugars where maltose is mainly distinguished, while with Agave must mainly fermentable sugars and non-fermentable soluble fiber of the fructo-oligosaccharides type are obtained, of which the latter is considered prebiotic and nutraceutical.

Approximately 75% of the total sugars in Agave must are fermentable. The rest of the sugars are made up of other non-fermentable carbohydrates, mainly soluble fiber and inulin. This is the result of a nutritional analysis of a product produced from a must with a concentration of close to 9°Brix. The analysis proved that the soluble fiber present In the product was a bit higher than 2% once fermentation was finalized and the production process concluded.

The first step for producing "Agave Beer" is formulating the must, by diluting the sugars extracted mostly from Agave plants in either regular or spring water, as is typical in top-fermenting (also known as Ale type) or bottom-fermenting (also known as Lager type) beers, in which the composition of carbonated and other salts are highly important in the quality of the finished product.

This must should have a total sugar concentration of between 6% (approximate density of 1.022) and 20% (approximate density of 1,081), measured at 20°C.

The must should be filtered using the processes and techniques typically used in the beer industry, with the objective of separating the filtered liquid from the remaining solids, facilitating the fermentation process and allowing the creation of a product with the transparency and clarity defined in the product's quality parameters.

During the formulation of the Agave must a key step is involved which refers to adjusting the pH of the liquid to reduce its acidity. Normally, an Agave must has a pH of between 3.0 and 3.9. This range is different than the pH of a traditional malt must which is commonly between 5.1 and 6.0. Therefore, if the known production process of traditional malt beer was followed without tending to the acidity correction, the result would be a final product with a pH of less than 4.0, which would mean it would be too acid to have a true potential for industrial application. If the Agave must's pH were not adjusted, on one hand the yeast that inoculates would not find the most adequate conditions to undertake an efficient fermentation and maximize alcohol production and, on the other, the final product would result with a flavor intensely more acid than that of the beers currently in the market which are produced from other raw materials. Simply substituting the cereal sugars for the Agave sugars does not obviously imply that an "Agave Beer" will result.

Therefore, as a result of the inventive activity relative to this product, we can conclude that it is necessary to guarantee a pH level above 4.0 when preparing the must, and preferably between 4.0 and 6.0 to reduce the final product's acidity and facilitate a better fermentation. This may be achieved through the water's pH or by adding some alkali that adjusts the pH, like potassium hydroxide, sodium hydroxide or calcium hydroxide, preferably the latter. The concentration of the alkali to be added to the must will be determined by its initial pH value and the pH level to be reached. As an example, calcium hydroxide with a molar-concentration of 0.0152 was added to a must whose original pH was 3.8, resulting in a must with a pH of 5.6, above the 4.0 value recommended as minimum.

Once the Agave must is obtained, it is subject to the traditional malt beer production process, with some modifications at certain later stages, compared to the normal process for producing a traditional malt beer.

The Agave must, contained in a closed, temperature-resistant container (though not air-tight) is preferably heated by circulating water vapor through a coil installed within the container and in contact with the must, to increase the liquid's temperature to at least 82°C and up to 100°C. This process is known as cooking.

The thermal treatment inherent to cooking ensures the complete elimination of all microorganisms present in the must, to prepare for a practically sterile environment ideal for the later development of the yeast.

The cooking of the must should last at least 15 minutes, preferably an hour, and during this period the hops or hops extract should be added in at least two different moments. The first moment is within 5 minutes after the must starts cooking, which is when the hops meant to give the product its flavor and bitterness is added to must. The humulones and lupulones or alpha and beta acids of the hops gradually go through Ilxiviation to the Agave must giving a flavor similar to the hopped malt beers. The hops also help the liquid's clarification process, since its tannin content favors the precipitations of the soluble proteins that cause turbidity.

The second moment is during the 5 minutes prior to the end of the cooking stage, when the hops intended to create aromatic features is added to the must. Hops may be added at more than two moments, but respecting these two specific moments described. The quantity of hops added depends on the bitterness we wish to obtain, which should be between 5 and 70 IBUs (International Bittering Units) and is related with the variety of selected hops and the alpha and beta acids (and the relation between these) present In each variety.

While cooking, the pH of the must decreases, which is the result of the integration of the alpha and beta acids from the hops. During the production of an Agave Beer batch at the laboratory stage it was proven that through the addition of 0.35 g/L of hops with 7.3% alpha acids to a must with a pH value adjusted to 5.6 and a total sugar concentration of 9°Brix, the pH value is reduced to 5.11 (measured in the same concentration of total sugars) after the cooking stage.

The integration of the hops' alpha and beta acids in the must during the cooking process generates a light change of color in the sample. Comparative tests between an Agave must in which 0.65 g/L hops with 7.3% alpha acids was added and a control with no hops showed that the cooking process, together with the addition of the alpha acids provided by the hops, significantly changed the saturation index of the samples. The saturation index ((a²+b²)1/2) calculated with the a* and b* parameters obtained through an instrumental color measure of the sample with hops was 31.6, while that of the not aromatized sample presented a value of 34.6, which confirms that the hopped must resulted a bit lighter In color.

Once the cooking stage ends, it is essential that the product, now known as "aromatized must" (in this case Agave), should cool in a period no longer than one hour to a temperature between 12 and 15°C if we wish to produce a beer with bottom fermentation, or less than 25° if we wish to produce a beer with top fermentation, depending on the type of yeast we wish to use for the fermentation. The cooling of the aromatized must should be very quick and it should not be left to cool naturally since by doing this we run the risk of the liquid becoming infected by undesired microorganisms found in the environment. To cool the aromatized must a heat exchange may be used or any other known industrial method that is used for these processes.

Likewise, before the yeast inoculation process begins, it is crucial to guarantee that the aromatized must maintains Its total sugar concentration between the established range (between a 6% and a 20% measured at 20°C). In case the cooking process causes the level of total sugars in the must to exceed the higher range limit, drinkable or spring water may be added to reduce its concentration.

Once the aromatized must has cooled and reached the desired temperature and the sugar concentration is within the range mentioned above is guaranteed, yeast is inoculated. Preferably a yeast type *Saccharomyces cerevisiae* should be used in order to be able to produce either a beer with bottom fermentation ( which will take place ideally at temperatures between 4 and 15°C), or a beer with top fermentation (which will take place Ideally at temperatures between 20 and 24°C). In the post, the yeast that produces bottom fermentation was known as *Saccharomyces cerevisise uvarum* while that which produces top fermentation was simply called *Saccharomyces cerevisiae.* Recently the term *"uvarum"* has been dropped and the yeast for beer is simply known by the name *Saccharomyces cerevisiae.*

The yeast which Is inoculated may be fresh, dehydrated, freeze-dried or contained in an environment and should be inoculated at a concentration of at least 5 x 10⁶ yeast cells per ml of must.

The yeast will carry out the biochemical process of fermentation, transforming the fermentable sugars of the must into alcohol and CO₂. This fermentation process will ideally last between 3 and 15 days depending on the type of fermentation and, especially, the fermentation temperature. For example, the fermentation of an Agave must adjusted at 12% of total sugars, will ideally last between 3 and 8 days at 20°C The fermentation ends when the must's fermentable sugars reduce their level, preferably at less than 5% and ideally at less than 3%. The process must take place in an air-tight container that will, however, allow control of the pressure that the production of CO₂ will generate and, in such case, recover any excess of this gas produced by the yeast in order to store it and later add It to the finished beer, if deemed necessary.

The Agave must contains a relatively low amount of alpha amino nitrogen (AAN). The analysis of a specific Agave must indicated that the level of AAN present was close to 12mg/L, which was substantially below the AAN levels present in hopped malt beers, which usually contain between 100 and 150 mg/L).

The AAN is an important substrate for yeast, which strengthens the capacity of the microorganism to include essential nutrients in its cellular structure and carry out a better fermentation. Likewise, from this source of nitrogen, rich in amino acids, the yeast generates the superior or "fusel" alcohols that contribute to the typical flavor profile of some distilled Agave beverages such as Tequila.

Although it is not essential, it is possible and recommendable to add what is known as "yeast meal" to the Agave must. This "meal" is used In industrial beer processes and it helps solve the low AAN levels that the Agave must naturally contains. The yeast meal consists in a mix of mineral and nitrogenated salts plus some vitamins such as biotin which ensure the yeast's good activity.

As mentioned above, the fusel alcohols originate from the amino acids that the yeast unfolds. A chromatographic gas analysis clearly shows the presence of Butane, Isobutene, and Isoamylic Alcohol in the Agave Beer, indicating that, in effect, the alpha amino nitrogen has transformed into superior alcohols, The enrichment of the Agave must with yeast meal favors a better fermentation in which the generation of ethylic alcohol and superior alcohols increases. These alcohols also contribute to the flavor and aroma profile of the beer.

To prove that adding yeast meal helps achieve more efficient must fermentation. 2 batches of Agave Beer were produced at the laboratory level, one was added with yeast meal (Yestex by Probamex) at a 0.2 g/L concentration and a control without yeast meal. After a prolonged period of fermentation (7 days), the must with added yeast meal generated 3.52% Ale. Vol., while the second generated 2.42% Alc. Vol. This technical evidence indicates that the yeast meal contributed to a more efficient fermentation.

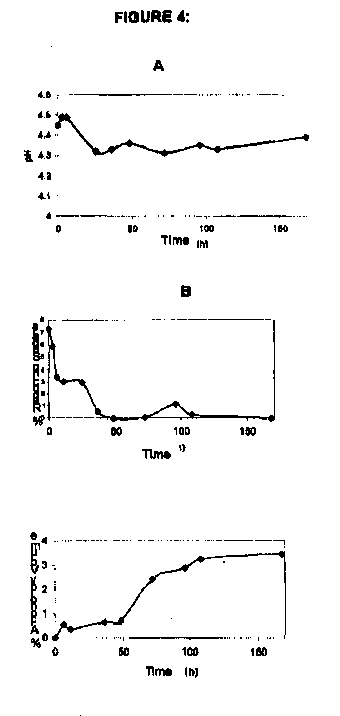

During the fermentation, the biochemical process undertaken by the yeast caused alterations in important parameters in the composition of the Agave must. In a fermentation derived from the inoculation of the surface yeast of a concentration of 7 million of cells per mL, which was monitored from the moment of the inoculation up to hour 168. changes in the following parameters were observed: during the measuring period, the pH level gradually dropped from 4.46 to 4.39 (see Figure 4A); the percentage of fermentable sugars was reduced from 7.3 to 0.3 (see Figure 4B), behavior which was consistent with the presence of alcoholic content in the sample, which increased from 0% to 3.48°C (see Figure 4C).

Figure 4 shows three graphs that contain the behavior over time of the three parameters monitored during the fermentation mentioned above, namely, changes in the pH (A), fermentable sugars (B) and percentage of alcohol by volume (C). The values on the graphs are an average of 3 repetitions.

The fermentation tests confirm the importance of adjusting the pH in the must. The comparative analysis of the two batches of Agave must with a total sugar concentration of 12%, of which one maintained its original pH value, of 3.8 while the other's pH value was adjusted to 5.6 shows that, after 4 days of fermentation under the same experiment conditions, the first batch showed a reduction in its total sugars up to 5%, while the second batch showed a reduction of total sugars up to 7%, which confirms that the pH adjustment improved the efficiency of the fermentation process.

Once the fermentation ends, it is advisable to let the liquid stand in an air-tight container, preferably at least 5 days at a temperature below 5°C. This process is known as "maturation" or "aging" and its main objective is to allow a greater sedimentation of the solids and the yeast that the beer still contains, improve its carbonation, further reduce the residual sugars and perfect the product's flavor. However, for economic or other reasons you may prefer to skip the maturation process, since after the fermentation the product already has the typical characteristics of the Agave Beer, although certainly not in an optimal way. The color of the Agave Beer can be lightened by applying conventional lightening techniques to the liquid with neutral, activated, bentonite clays, or any other such material, preferably after the fermentation. However, be sure to eliminate such substances afterward, through the filtration or diphasic centrifugation.

Next, the product must be filtered or subject to a diphasic centrifugation in order to separate worn yeast and solids that still remain within. Some of those solids could be the neutral, activated, bentonite soils or clays or other such material that may have been used in case the lightening process of the beer was done. By eliminating such solids the transparency improves and the brilliance of the Agave Beer increases.

Finally, the Agave Beer is bottled in clean, air-tight containers with which the process can be considered as completed. However, in case you wish to prolong the life of the product once bottled, care must be taken to eliminate the oxygen in the form of gas within the bottle, as well as undertaking a pasteurization process of the bottled product, to reduce the presence of live microorganisms in the product.

The technical characteristics of the product named "Agave Beer" are; up to 8% of Alcohol by Volume (the percentage of Alcohol by Volume must remain within the range in which most traditional malt beers are found preferably between 3% and 6%); has a bitterness between 5 and 70 IBUs (International Bittering Units), mainly the result of the addition of hope; it's transparent, with a color that varies from light yellow to dark amber; has foam and bubbles, as a consequence of the CO₂ present, generated by the yeast and/or by the carbonation; and may have a slightly sweet taste generated by the residual fermentable sugars of the Agave, as well as an aroma including a noticeable aroma of hops and Agave.

Due to its Inulin content, the beer obtained can be considered a prebiotic nutraceutical since it ferments In the large intestine, producing metabolites that prevent colon cancer and reduce blood cholesterol. There is substantial scientific evidence concerning these positive effects of inulin in the human being.

Also, Agave beer may be considered as "light", that is, classified as low in calories with respect to traditional malt beers, because it does not contain dextrins, while the carbohydrates that remain In it after the fermentation are mainly composed of soluble fiber that does not contribute any digestible energy when consumed by humans.

A nutritional analysis of the product obtained through the process described above indicates that the Agave Beer may be catalogued as a light beer since it has one third less calories than a beer produced with traditional raw material. The following table shows a comparison of the nutritional values of an Agave Beer, obtained in the laboratory and those reported by the United States Department of Agriculture (USDA) for a Budweiser brand beer, considered a traditional beer. According to the results presented in the table, the Agave Beer contained 2% soluble fiber, which helps control the blood cholesterol levels.

**Nutritional Information of an Agave Beer obtained at a laboratory level and a Beer obtained with the traditional must**

| | Agave beer (% b. h.) | Traditional beer (BUDWEISER)* (% b. h.) |
|---|---|---|
| Moisture | 93.73 | 92.77 |
| Ashes | 0.24 | 0.11 |
| Protein | 0.10 | 0.36 |
| Fat | 0.10 | 0.0 |
| Raw fiber | 0.11 | 0.0 |
| Soluble fiber | 2.09 | 0.0 |
| Carbohidrates | 0.0 | 2.87 |
| Alcohol | 3.48 | 3.9 |
| Kcal/100 g | 27 | 41 |

| | | |
|---|---|---|
| * Data obtained from the Nutritional Datebese of the USDA. | | |

On the other hand, the results of two focus group sessions undertaken with 14 people, indicate that in a blind taste test 71.43% of the participants considered the product as a beer with special characteristics, which definitely places the product within the beer niche. Also, once the participants received complete information of the product and the concept, 100% of them mentioned they would be willing to become a consumer of the product and 85.71% of them indicated they would be willing to become involved as an investor in a project to produce "Agave Beer"

The information above confirms that "Agave Beer" has an important potential in the market, which grants it a true industrial application.

I reiterate my conviction that the Agave Beer hereby described implies, within itself, a novelty resulting from an inventive activity that offers an important Industrial and commercial application. It is not about an obvious innovation for someone with knowledge in the field, but that, through the adequate structuring of different productive process stages and the substitution of raw material of a different nature, a new product is created which could not be obtained any other way. This invention is not obvious for technicians in the tequila industry, nor is it for technicians In the beer industry, since despite the long tradition and interaction of both industries in our country; an "Agave Beer" has not been developed before.

Although beer production in Mexico exceeds 50 million hectoliters a year and is worth more than 60 billion pesos, according to 2004 figures; and despite the fact that Agave distilled spirits are currently the most important category of spirits in Mexico, an Agave Beer has not been developed, dlsseminated or marketed nor any product that, with another name, corresponds to the product which results from the process described in this document. This fact is very important since it demonstrates that "Agave Beer" is a true novelty at a worldwide level, resulting from an inventive activity and which has an industrial application in the spirits sector.

It is worth mentioning that "Agave Beer" helps to solve the current problem of the productive chains of different Agave plants, on which many families depend. These type of plants are cultivated in Mexico mainly to provide the raw material for the production of distilled drinks, however, many times the availability of plants is much more than what the industry requires so that, with no other significant alternative for consumption, many of these plants go to waste in the fields, with the consequent damage to the productive chain and the economy of those who depend on them. The "Agave Beer" provides a possibility for the excess plants be taken advantage of also in the production of this new drink.

The arguments above help to confirm that this invention complies with the patentability requisites established in the Industrial Property Law of the United Mexican States, namely, it is a novelty, result of an inventive activity and with an industrial application.

### BRIEF DESCRIPTION OF THE DRAWING

Figure 1.- Presents a diagram of the known process used for the production of Tequila.
Figure 2.- Presents a diagram of the known process used for the production of malt beer.
Figure 3.- Presents in a general manner the necessary process to carry out the invention and obtain the "Agave Beer" beginning from the use of a must whose fermentable sugars derive mostly from Agave plants, substituting a must with sugars from malt cereals.
Figure 4.- Shows three graphs with values over time of: Changes in pH (A), fermentable sugars (B) and percentage of alcohol by volume (C), during the fermentation process of an Agave must. The values specified are the average of 3 repetitions.

### PREFERRED REALIZATION OF THE INVENTION

To carry out the invention it was necessary to follow the process described above derived from an inventive activity, which allowed us to obtain a product with a true industrial application.

Due to the importance of certain alterations that this process requires, in relation to the way in which traditional malt beer is produced, said alterations are mentioned below:

The first important modification consists in the substitution of the source of fermentable sugars leaving out those which are obtained from the malt of a cereal to instead use the sugars obtained for the most part from Agave plants.

An Agave must was formulated with said sugars through the widely known techniques applied by the Tequila industry for such purpose, since it could not be obtained through the application of the stages of malting of the grain, grinding and macerating of the malt as in the production of traditional malt beer.

It was also determined that the Agave must should be adjusted to reduce its acidity, in other words, increase its pH. The acidity of an Agave must used to produce Tequila is not a determinant factor in such process. However, for an Agave must that is meant for a production of a beer from this raw material, the pH should preferably be adjusted to a level between 4.0 and 6.0.

To carry out this invention a temperature of at least 82°C and up to 100°C should also be applied during the cooking process.

All of these elements make up a creative process whose results are not inferred from prior art in an obvious way by a technician in the field.

In summary, it was possible to obtain an Agave Beer following a process with the stages mentioned below:
a) In the formulation, the base used was an Agave must obtained from the cooking of heads of plants of the specie *Agave Tequilana* A. Weber in an autoclave. The cooking consisted in applying steam to the Agave heads for 8 hours at a pressure of 1.6 kg per cm², as well as leaving the heads to stand inside a closed autoclave for three more hours. These heads were squeezed with the help of a various steps mill and adding water, which allowed us to obtain the sugars and create the must. The must was filtered with the help of a cellulose filter to separate the liquid from the retained solids; afterward, the total sugar concentration was adjusted until reaching 11%. The must's pH was regulated taking its initial value of 3.7 up to 6.0, adding 1 gram of calcium hydroxide per liter of must (meaning a molar concentration of 0.0136 of the compound). A batch of 20 liters of must was prepared.
b) Once the batch was prepared, the liquid was poured Into a previously heated cooking pot at a temperature over 82°C. Once this temperature was reached (and making sure that it did not exceed 100°C) five minutes passed and 8 grams of hops of the Tetnanger variety were added, with 8.8% alpha acids, after which the cooking process continued for 60 minutes longer. Immediately after this time elapsed a new load of hops was added, which consisted in 4 grams of the Hallertau variety, with 3.7% alpha acids, and 2 grams more of the Tetnanger variety, and 5 more minutes elapsed before the liquid was removed from the heat.
c) The resulting liquid was then passed through a heat exchanger. So that, within minutes (less than an hour), its temperature would drop to 24°C, after which it was transferred to a container where the fermentation would take place. The concentration of total sugars of the must, ready for fermentation was 12% (measured at 20°C).
d) Once the aromatized must reached 24°C, 1 gram of freeze-dried Windsor Ale yeast was added for each liter of must, meaning, 20 grams in total, which was previously reconstituted in 300ml of water at room temperature. The container was hermetically closed to avoid contamination with organisms other than the inoculated yeast. We checked that the container had a device known as "air-lock" which allows the elimination of excess carbon dioxide generated by the fermentation process, preventing air to enter from the outside.
e) Once the yeast was inoculated, the must was left to stand for six days during which the fermentation took place. This process was evident by the production of gas which was expelled through the air-look. On the fifth day of the fermentation the container was hermetically sealed to maintain the gas produced during the last day of the fermentation, which allowed the product to develop foam and bubbles. Once the six days elapsed, the total sugar concentration in the liquid was reduced to 5%. However, it was left to stand for another 5 days so that it would clarify further and during this time there was an additional sedimentation of solids and yeast present in the liquid.
f) Afterward, the beer was transferred through cellulose filters to reduce its cloudiness and increase its transparency and it was bottled in new bottles, During the bottling process carbon dioxide was added to increase the quantity of foam and bubbles and the bottles were hermetically closed.
g) The sealed bottles were passed through a tunnel through which they underwent various water shower stages until reaching a temperature of 60°C to reach its pasteurization.

The formulation and the processes described above allowed us to obtain a beer with approximately 4% Alcohol in Volume, a bitterness of 14 IBUs, an intense amber color, abundant bubbles and foam and an aroma and taste in which the hops as well as the Agave must stand out.

## Claims

1. A process for the production of an beer-type, alcoholic drink, based on the plants belonging to the family of the Agavaceae and to the genus of the *Agave* L., which is **characterized by** the following stages: 1) formulate a must by diluting the sugars extracted mostly from Agave plants in drinking water, preferably using the known techniques applied by the Tequila industry for such effect. 2) cook the must, 3) add hops to the liquid during cooking, 4) cool the resulting aromatized must, 5) inoculate the yeast, 6) let the liquid to stand in a pressure-resistant, air-tight container, 7) filter or centrifuge the liquid, 8) bottle the Agave Beer.

2. The process for the production of a beer-type alcoholic drink, based on the plants belonging to the Agavaceae and to the genus of the Agave L., according to claim 1, **characterized in that**, in the formulation stage, the must has a sugar concentration, extracted mostly from Agave plants, of between 6 and 20% measured at 20°C and has a pH between 4.0 and 6.0, for which, if necessary, an alkali such as potassium hydroxide, sodium hydroxide or calcium hydroxide -- preferably the latter- is used to adjust the pH.

3. The process for the production of a beer-type alcoholic drink based on plants belonging to the family of the Agavaceae and to the genus of the Agave L., according to claim 1, **characterized in that**, in the cooking stage of the must, the temperature is adjusted at a minimum of 82°C and a maximum of 100°C; and this stage should take place in a heat resistant container, for at least 15 minutes.

4. The process for the production of a beer-type alcoholic drink based on plants belonging to the family of the Agavaceae and to the genus of the Agave L., according to claim 1, **characterized in that** the stage of the addition of hops to the liquid during its cooking takes place at two different moments: During the first five minutes of boiling the hop which provides the bitterness is added and during the 5 minutes before the end of the boiling, the hop which provides the aroma is added, such that the quantity of hops that is added will give-the final product a level of bitterness between 5 and 70 IBUs.

5. The process of the production of a beer-type alcoholic beverage, based on the plants belonging to the family of the Agavaceae and to the genus of the Agave L., according to claim 1, **characterized in that** the cooling stage of the aromatized must takes place in a period no longer than an hour, to reach a temperature between 12 and 15°C to produce a beer with bottom fermentation, or, under 25°C to produce a beer with top fermentation, the product for both types of fermentations being placed in an air-tight container that withstands the pressure resulting from the fermentation.

6. The process of the production of a beer-type alcoholic beverage, based on the plants belonging to the family of the Agavaceae and to the genus of the Agave L., according to claim 1, **characterized in that** in the inoculation stage, the yeast to be used is of the Saccharomyces cerevisiae type, which will produce either the bottom fermentation or the top fermentation, depending on the inoculation stage temperature, and for an efficient fermentation, a yeast meal is added to the must.

7. The process of the production of a beer-type alcoholic beverage, based on the plants belonging to the family of the Agavaceae and to the genus of the Agave L., according to claim 1, **characterized in that** the resting stage of the liquid in an air-tight, pressure-resistant container takes place in a period of over 3 days, preferably between 3 and 15 days so that the fermentation will take place this period can be extended for some more days, around 5, if a maturation of the product is desired.

8. The process of the production of a beer-type alcoholic beverage, based on the plants belonging to the family of the Agavaceae and to the genus of the Agave L., according to claim 1, **characterized in that** the filtering stage takes place to separate the filtered substance from the retained solids.

9. The process of the production of a beer-type alcoholic beverage, based on the plants belonging to the family of the Agavaceae and to the genus of the Agave L., according to claim 1, **characterized in that** at the bottling stage of the "Agave Beer" clean, air-_tight containers are used and, if necessary, additional CO2 is added, and during this stage a pasteurization being optionally carried out in order to prolong the life of the product.

10. An agave-based, beer-type alcoholic drink, obtained through the method or production process described in claim1 and dependent claims 2, 3, 4, 5, 6, 7, 8, 9, which is **characterized by** an alcoholic proof of up to 8% alcohol by volume; has a bitterness of between 6 to 70 IBUs (International Bittering Units), is transparent, with a color varying between clear yellow and dark amber; has foam and bubbles; and has a slightly sweet taste generated by the residual fermentable sugars and an aroma including a noticeable aroma of hops and Agave must.

## Patentansprüche

1. Herstellungsverfahren eines alkoholischen, bierartigen Getränks, auf der Basis von Pflanzen, die der Familie der Agavaceae und der Gattung *Agave L* zugehören., **gekennzeichnet durch** folgende Schritte: 1) Zubereitung eines Mosts, indem die zum Großteil aus Agavenpflanzen extrahierten Zucker in Trinkwasser aufgelöst werden, vorzugsweise unter Anwendung der aus der Tequila-Industrie hierzu bekannten und angewandten Techniken, 2) Kochen des Mosts, 3) während dem Kochen, Zugabe von Hopfen zur Flüssigkeit, 4) Abkühlen des erhaltenen aromatisierten Mosts, 5) Beimpfung mit Hefe, 6) die Flüssigkeit in einem druckdichten, hermetisch geschlossenen Behälter ruhen lassen, 7) die Flüssigkeit filtern oder zentrifugieren, 8) das Agavenbier abfüllen.

2. Herstellungsverfahren eines alkoholischen, bierartigen Getränks, auf der Basis von Pflanzen, die der Familie der Agavaceae und der Gattung *Agave L* zugehören., nach Anspruch 1, **dadurch gekennzeichnet, dass** bei dem Schritt des Zubereitung des Mosts, dieser eine Zuckerkonzentration von zum Großteil aus Agavenpflanzen extrahierten Zuckern von 8 bis 20 %, gemessen bei 20 °C, aufweisen muss, sowie einen pH-Wert von über 4,0, vorzugsweise von 4,0 bis 6,0, wofür falls notwendig ein Alkali, wie Kaliumhydroxid, Natriumhydroxid oder Calciumhydroxid, vorzugsweise letzeres, verwendet werden kann, die es ermöglichen, den Säuregehalt zu verringern; die Menge an Alkali hängt von dem ursprünglichen Säuregehalt des Mosts ab, sowie von dem pH-Wert, der innerhalb des oben genannten Bereichs erreicht werden soll.

3. Herstellungsverfahren eines alkoholischen, bierartigen Getränks, auf der Basis von Pflanzen, die der Familie der Agavaceae und der Gattung *Agave L* zugehören., nach Anspruch 1, **dadurch gekennzeichnet, dass** in dem Schritt, in dem der Most gekocht wird, die Temperatur zwischen mindestens 82 °C und höchstens 100 °C liegen muss; und dieser Schritt muss in einem hitzebeständigen Behälter über einen Zeitraum von mindestens 15 Minuten stattfinden.

4. Herstellungsverfahren eines alkoholischen, bierartigen Getränks, auf der Basis von Pflanzen, die der Familie der Agavaceae und der Gattung *Agave L* zugehören., nach Anspruch 1, **dadurch gekennzeichnet, dass** der Schritt der Zugabe des Hopfens zu der Flüssigkeit während dem Kochen zumindest zu zwei verschiedenen Zeitpunkten stattfindet: während den ersten fünf Minuten des Siedens wird der Hopfen hinzugefügt, der die Bitterkeit ergibt und 6 Minuten vor Ende des Siedens wird der Hopfen hinzugefügt, der das Aroma verleiht. Die Menge an Hopfen, die zugegeben wird, muss bewirken, dass das Endprodukt eine Bitterkeit von 5 bis 70 IBU erreicht; diese Bitterkeit hängt von der Art der Hopfenpflanze ab sowie von deren Gehalt an Alpha- und Betasäuren.

5. Herstellungsverfahren eines alkoholischen, bierartigen Getränks, auf der Basis von Pflanzen, die der Familie der Agavaceae und der Gattung *Agave L* zugehören., nach Anspruch 1, **dadurch gekennzeichnet, dass** der Schritt des Abkühlens des aromatisierten Mosts in einem Zeitraum von höchstens einer Stunde stattfindet, bis die Temperatur in einem Bereich von 12 °C bis 15 °C liegt, wenn ein untergäriges Bier hergestellt werden soll, oder unter 25 °C, wenn ein obergäriges Bier hergestellt werden soll; das Produkt ist in einem hermetisch geschlossenen Behälter aufzubewahren, der dem sich aus der Gärung ergebenden Druck standhält.

6. Herstellungsverfahren eines alkoholischen, bierartigen Getränks, auf der Basis von Pflanzen, die der Familie der Agavaceae und der Gattung *Agave L* zugehören., nach Anspruch 1, **dadurch gekennzeichnet, dass** bei dem Schritt des Beimpfens, die bevorzugte Hefe eine *Saccharomyces cerevisiae* ist, die eine Untergärung oder eine Obergärung bewirkt und dadurch dass es bei diesem Schritt möglich und vorteilhaft ist, dem Most ein Nährmittel für die Hefe zuzugeben, was eine bessere Gärung bewirkt.

7. Herstellungsverfahren eines alkoholischen, bierartigen Getränks, auf der Basis von Pflanzen, die der Familie der Agavaceae und der Gattung *Agave L* zugehören., nach Anspruch 1, **dadurch gekennzeichnet, dass** der Schritt, in dem die Flüssigkeit in einem druckfesten, hermetisch geschlossenen Behälter ruht, über einen Zeitraum von mehr als 3 Tagen stattfinden muss, vorzugsweise über 3 bis 15 Tage, damit die Gärung stattfinden kann; dieser Zeitraum kann noch um einige Tage, ungefähr 5 Tage, verlängert werden, wenn eine Reifung des Produkts gewünscht ist.

8. Herstellungsverfahren eines alkoholischen, bierartigen Getränks, auf der Basis von Pflanzen, die der Familie der Agavaceae und der Gattung *Agave L* zugehören., nach Anspruch 1, **dadurch gekennzeichnet, dass** der Schritt des Filterns durchgeführt wird, um das Filtrat von den zurückgehaltenen Feststoffen zu trennen.

9. Herstellungsverfahren eines alkoholischen, bierartigen Getränks, auf der Basis von Pflanzen, die der Familie der Agavaceae und der Gattung *Agave L* zugehören., nach Anspruch 1, **dadurch gekennzeichnet, dass** in dem Schritt für das Abfüllen des "Agavenbiers" saubere und hermetisch geschlossene Behälter benutzt werden und, falls notwendig, wird zusätzlich CO₂ zugegeben; bei diesem Schritt kann eine Pasteurisierung stattfinden, um die Lebensdauer des Produkts zu verlängern.

10. Alkoholisches, bierartiges Getränk, auf Agavenbasis, erhalten durch ein Herstellungsverfahren oder einen Herstellungsprozess, die in Anspruch 1 und den Unteransprüchen 2, 3, 4, 5, 6, 7, 8 und 9 beschrieben sind, **dadurch gekennzeichnet, dass** es einen Alkoholgehalt von bis zu 8 Volumenprozent Alkohol aufweist; eine Bitterkeit von 6 bis 70 IBU (internationale Bittereinheiten, *International Bittering Units*), durchsichtig ist, mit einer Farbe, die von hellgelb bis bernsteinfarben gehen kann; es hat Schaum und Bläschen; und hat einen leicht süßen Geschmack, der durch die restlichen gärfähigen Zucker entsteht und mit einem Aroma, in dem Hopfen und Agavenmost klar zu erkennen sind.

## Revendications

1. Processus d'élaboration d'une boisson alcoolique, comme de la bière, à base de plantes appartenant à la famille des Agavacées et au genre des *Agave L.,* **caractérisé par** les phases suivantes: 1) formuler du moût en diluant dans de l'eau potable des sucres dont la plupart sont extraits de plantes d'Agave, en utilisant de préférence des techniques connues et appliquées à cet effet par l'industrie du tequila, 2) cuire le moût, 3) ajouter de l'houblon au liquide pendant la cuisson, 4) refroidir le moût aromatisé résultant, 5) inoculer la levure, 6) laisser reposer le liquide dans un récipient hermétique résistant à la pression, 7) filtrer ou centrifuger le liquide, 8) conditionner la Bière d'Agave.

2. Processus d'élaboration d'une boisson alcoolique, comme de la bière, à base de plantes appartenant à la famille des Agavacées et au genre des *Agave L.*, d'après la revendication 1, **caractérisé en ce que** dans la phase de formulation, le moût doit avoir une concentration de sucres, dont la plupart sont extraits des plantes d'Agave, d'entre 8 et 20%, mesurés à 20 °C et il doit présenter un pH supérieur à 4,0, de préférence entre 4,0 et 6,0 ; pour cela on peut utiliser, si nécessaire, un alcali tel que l'hydroxyde de potassium, l'hydroxyde de sodium ou l'hydroxyde de calcium de préférence, qui permettront de réduire l'acidité; la quantité d'alcali va dépendre de l'acidité originale du moût et de la valeur de pH que l'on souhaite atteindre dans le rang décrit ci-dessus.

3. Processus d'élaboration d'une boisson alcoolique, comme de la bière, à base de plantes appartenant à la famille des Agavacées et au genre des *Agave L*., d'après la revendication 1, **caractérisé en ce que**, dans la phase de cuisson du moût, la température doit être située à un minimum de 82 °C et à un maximum de 100 °C; cette phase doit avoir lieu dans un récipient résistant à la chaleur pendant au moins 15 minutes.

4. Processus d'élaboration d'une boisson alcoolique, comme de la bière, à base de plantes appartenant à la famille des Agavacées et au genre des *Agave L*., d'après la revendication 1, **caractérisé en ce que** la phase d'ajout de l'houblon au liquide pendant la cuisson a lieu à deux moments différents au moins: pendant les cinq premières minutes d'ébullition on ajoute le houblon qui confère la touche d'amertume et pendant les six minutes précédant la fin de l'ébullition on ajoutera l'houblon qui lui conférera l'arôme. La quantité d'houblon à ajouter vise à ce que le produit atteigne un niveau d'entre 5 et 70 IBU; l'amertume dépendra de la variété de la plante de houblon et de sa teneur acides alpha et bêta.

5. Processus d'élaboration d'une boisson alcoolique, comme de la bière, à base de plantes appartenant à la famille des Agavacées et au genre des *Agave L*., d'après la revendication 1, **caractérisé en ce que** la phase de refroidissement du moût aromatisé ne dure pas plus d'une heure, jusqu'à ce que la température se situe dans un intervalle d'entre 12 °C et 15 °C si l'on souhaite élaborer une bière avec une fermentation au fond, ou en dessous de 25 °C si l'on souhaite élaborer une bière avec une fermentation en surface: le produit doit être conditionné dans un récipient hermétique supportant la pression résultante de la fermentation.

6. Processus d'élaboration d'une boisson alcoolique, comme de la bière, à base de plantes appartenant à la famille des Agavacées et au genre des *Agave L*., d'après la revendication 1, **caractérisé en ce que** dans la phase d'inoculation, la levure préférée sera du type *Saccharomyces cerevisiae,* et produira la fermentation au fond ou en surface et **en ce que** pendant cette phase il est possible et recommandé d'ajouter de l'aliment de levure au moût, ce qui permettra une meilleure fermentation.

7. Processus d'élaboration d'une boisson alcoolique, comme de la bière, à base de plantes appartenant à la famille des Agavacées et au genre des *Agave L*., d'après la revendication 1, **caractérisé en ce que** la phase de repos du liquide dans un récipient hermétique résistant à la pression doit avoir lieu pendant plus de 3 jours, entre 3 et 15 jours de préférence, pour que la fermentation se produise; cette période de temps peut être augmentée pendant plusieurs jours de plus, environ 5, si l'on souhaite une plus grande maturation du produit.

8. Processus d'élaboration d'une boisson alcoolique, comme de la bière, à base de plantes appartenant à la famille des Agavacées et au genre des *Agave L*., d'après la revendication 1, **caractérisé en ce que** l'étape de filtrage est effectuée pour séparer la substance filtrée des solides retenus.

9. Processus d'élaboration d'une boisson alcoolique, comme de la bière, à base de plantes appartenant à la famille des Agavacées et au genre des *Agave L*., d'après la revendication 1, **caractérisé en ce que** lors de la phase de conditionnement de la "Bière d'Agave" on utilise des récipients propres et hermétiques et **en ce que** l'on pourra utiliser du CO₂ additionnel si nécessaire; pendant cette phase on peut effectuer une pasteurisation dans le but de prolonger la vie du produit.

10. Boisson alcoolique, comme de la bière, à base d'Agave, obtenue à travers un procédé ou un processus d'élaboration décrit dans la revendication 1 et les revendications dépendantes 2, 3, 4, 5, 6, 7, 8 y 9, **caractérisée en ce qu'**elle possède un titre alcoolique volumique d'un maximum de 8%; son taux amertume est d'entre 6 et 70 IBU (Unité Internationale d'Amertume, *International Bittering Units*), **en ce qu'**elle est transparente, que sa couleur varie entre le jaune clair et l'ambre foncé, qu'elle a de la mouse et des bulles, une légère saveur douce produite par les sucres fermentables résiduaires et un arôme perceptible d'houblon et de moût d'Agave.
